# EUROPÄISCHE PATENTSCHRIFT

(11) **EP 0 795 441 B1**
(45) Veröffentlichungstag und Bekanntmachung des Hinweises auf die Patenterteilung: **20.01.1999**
(21) Anmeldenummer: 97104178.5
(22) Anmeldetag: 12.03.1997
(51) Int. Cl.: B60R 21/16

(54) **Verfahren zum Zusammenbau eines Airbag-Generatorträgers mit einem zugehörigen Gassack und Halterung für den Generatorträger während des Zusammenbaus**
Method for assembling an airbag inflator support with the associated inflatable member and device for maintaining said support during the assembling
Procédé d'assemblage d'un support de générateur de gaz avec le sac de sécurité gonflable associé et dispositif pour maintenir ledit support durant l'assemblage

(30) Priorität: 14.03.1996 DE 19610058
(43) Veröffentlichungstag der Anmeldung: 17.09.1997
(73) Patentinhaber: TAKATA (EUROPE) VEHICLE SAFETY TECHNOLOGY GmbH, D-89081 Ulm (DE)
(72) Erfinder: Wittmann, Robert, 89233 Neu-Ulm (Reutti) (DE); Müller, Frank, 89134 Blaustein (Herrlingen) (DE); Niederkorn, Serge, 89075 Ulm (DE); Settele, Martin, 89160 Tomerdingen (DE); Früh, Hans-Jürgen, 89188 Merklingen (DE); Wahlers, Helmut, 09481 Elterlein (DE)
(74) Vertreter: Finsterwald, Martin

(56) Entgegenhaltungen:
- DE-U-29 510 775
- US-A- 4 798 152
- US-A- 5 365 651
- PATENT ABSTRACTS OF JAPAN vol. 018, no. 412 (P-1780), 2.August 1994 & JP 06 123780 A (NICHIBAKU:KK), 6.Mai 1994,

## Beschreibung

Die Erfindung betrifft ein Verfahren zum Zusammenbau eines Airbag-Generatorträgers mit einem zugehörigen Gassack nach dem Oberbegriff des Patentanspruchs 1.

Da der Generatorträger innerhalb des Gassackes angeordnet werden muß, besteht eine übliche Technik darin, den Gassack aus einzelnen Materialbahnen um den in seinem Inneren befindlichen Generatorträger herum zuzunähen. Hierbei besteht aber das Problem, daß, z.B. durch Nadelbeschädigungen oder Nadelbruch Metallteile im oder am Gassack abgelagert werden, die bei einer Entfaltung des Gassackes während eines Unfalls die an sich zu schützende Person verletzen könnten. Aus diesem Grunde muß bei der Herstellung eines Gassackes dafür gesorgt werden, daß dort beispielsweise durch Nadelbeschädigung oder Nadelbruch abgelagerte Metallteile erkannt werden können, damit derartige Gassäcke ausgesondert oder von den Metallteilen befreit werden können.

Das Ziel der Erfindung besteht darin, ein Verfahren der eingangs genannten Gattung zu schaffen, bei dem problemlos die unerwünschte Ablagerung von Metallteilen im oder am Gassack festgestellt werden kann, gleichwohl aber der aus Metall bestehende Generatorträger, ohne das Aufspüren von Metallteilen zu behindern, in den Gassack eingebracht werden kann.

Zur Lösung dieser Aufgabe sind die Merkmal des kennzeichnenden Teils des Patentanspruchs 1 vorgesehen.

Der Erfindungsgedanke besteht also darin, daß der Gassack bis auf einen kurzen Schlitz, der gerade zur Einbringung des metallischen Generatorträgers ausreicht, bereits vollständig zugenäht wird, so daß er weitgehend bereits die Endform annimmt. In diesem Zustand kann der gesamte Gassack durch ein Metallaufspürgerät hindurchgeführt bzw. an einem solchen vorbeigeführt werden, wobei etwaige Metallreste durch abgebrochene Nadeln aufgespürt und der betreffende Gassack anschließend ausgesondert oder die gefundenen Metallreste entfernt werden können. Die Prüfung auf Metallreste wird erfindungsgemäß also durchgeführt, bevor der aus Metall bestehende Generatorträger in den Gassack eingebracht wird, weil letzterer die Aufspürung von Metallresten erschweren oder gar unmöglich machen würde.

Anschließend wird dann der Generatorträger in den garantiert metallfreien und bereits weitgehend fertiggestellten Gassack eingebracht, worauf nur noch der kurze Einbringungsschlitz zugenäht werden muß. Damit auch hierbei in den Gassack unerwünschterweise eingebrachte Metallteile durch Nadelbeschädigung oder Nadelbruch erkannt werden können, erfolgt dieses Zusammennähen erfindungsgemäß unter Überwachung, vorzugsweise Videoüberwachung der Nähnadeln oder sonstiger mit dem Gassack in Kontakt kommender Metallteile.

Nach dem Einbringen des Generatorträgers und dem vollständigen Zunähen des Gassackes ist somit sicher gewährleistet, daß sich nicht unerwünschte Metallstücke im oder am Gassack befinden, die im Falle einer Auslösung der Airbaganordnung einen Insassen verletzen könnten.

Eine bevorzugte Weiterbildung des erfindungsgemäßen Verfahrens ist durch Anspruch 2 gekennzeichnet.

Besonders bevorzugt ist die Ausführungsform nach Anspruch 3, weil hierbei der durch den kurzen Schlitz bereits eingebrachte Generatorträger noch vor Einsetzen des eigentlichen Generators mittels der Halterung an der Nähmaschine, die den kurzen Schlitz anschließend zunäht, problemlos gehandhabt werden kann.

Eine besonders bevorzugte Ausführungsform des erfindungsgemäßen Verfahrens ist durch Anspruch 5 gekennzeichnet.

Der mit dem Gassack zusammengebaute Generatorträger wird schließlich zweckmäßigerweise in ein zu öffnendes Gehäuse gebracht, welches anschließend geschlossen wird und durch die Aufblähkraft des Gassackes im Falle einer Zündung des Generators aufgesprengt werden kann.

Die Erfindung betrifft weiter eine Halterung nach Anspruch 7, mittels der ein mit dem Gassack zusammengebauter Generatorträger sowohl beim Zusammennähen des kurzen Schlitzes als auch bei der weiteren Montage problemlos gehandhabt werden kann, und zwar sowohl maschinell als auch von Hand. Den nächstliegenden Stand der Technik zu dieser Ausführungsform stellt die US 5 365 651 A dar.

Die Erfindung wird im folgenden beispielsweise anhand der Zeichnung beschrieben; in dieser zeigt
- Figur 1: einen Gassack einer erfindungsgemäßen Airbag-Anordnung mit darin bereits eingebrachtem Generatorträger und an diesem angeordneter Halterung,
- Figur 2: eine perspektivische Ansicht eines aus zwei Gehäusehälften bestehenden Gehäuses mit dem über ein Zwischenteil darin unterzubringenden Generatorträgers,
- Figur 3: eine perspektivische Ansicht des in dem Generatorträger nach den Figuren 1 und 2 einbringbaren Generators und
- Figur 4: eine perspektivische Ansicht eines mit einer Halterung 16 versehenen Tragteils 17 zur Einführung in den Generatorträger 11.

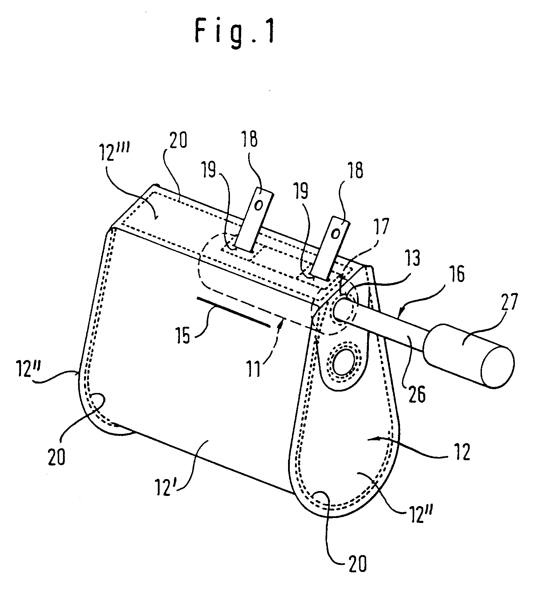

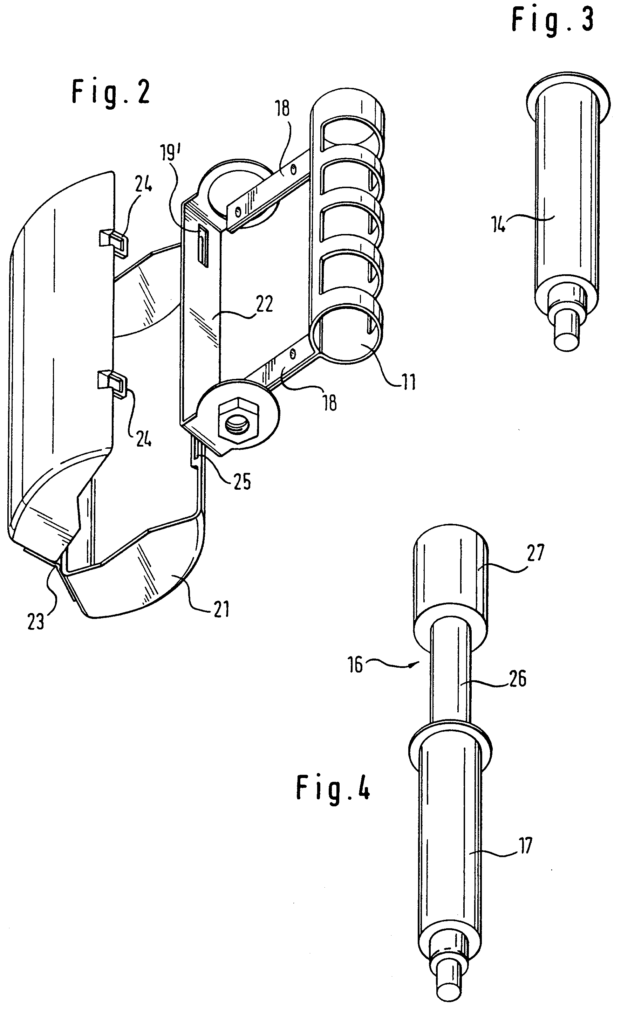

Nach Figur 1 weist eine erfindungsgemäße Airbag-Anordnung einen taschenförmigen Gassack 12 mit zwei im wesentlichen tropfenförmigen und ebenen Stirnseiten 12'' und eine die beiden Stirnseiten 12'' umspannende, im unteren Bereich stark gekrümmte Umfangsfläche 12' auf. Die Stirnflächen 12'' und die Umfangsfläche 12' treffen sich an einer ebenen Flachseite 12''', die zwei Schlitze 19 zum Durchtritt der Befestigungsflaschen 18 eines zylindrischen Generatorträgers 11 aufweist (siehe auch Fig. 2), welcher sich im Inneren des Gassackes 12 befindet. Gegenüber der einen Stirnöffnung des Generatorträgers 11 weist die eine Stirnfläche 12'' des Gassackes 12 nahe der flachen Stirnseite 12''' eine kreisförmige Öffnung 13 auf, in die später der Generator 14 (Fig. 3) eingesetzt wird.

Nahe der flachen Stirnseite 12''' befindet sich in der Umfangsfläche 12' ein relativ kurzer Schlitz 15, dessen Größe so bemessen ist, daß durch ihn hindurch der Generatorträger 11 mit den Laschen 18 eingebracht und in die Position nach Figur 1 überführt werden kann.

An der Öffnung 13 in Figur 1 befindet sich eine in Fig. 4 gezeigte Halterung 16, die ein Tragteil 17 aufweist, welcher formmäßig dem Generator 14 (Fig. 3) entspricht. Das Tragteil 17 sitzt innerhalb des zylindrischen Innenraums des Generatorträgers 11 und ist so formschlüssig mit dem Generatorträger 11 verbunden.

Die Halterung 16 weist weiter eine sich axial vom Tragteil 17 weg erstreckende Haltestange 26 mit einem Haltegriff 27 an ihrem Ende auf.

Die Herstellung und Montage einer Airbaganordnung nach Figur 1 geht wie folgt vor sich:

Zunächst wird der Gassack 12 noch ohne eingesetzten Generatorträger 11 durch Herstellung der verschiedenen Nähte 20 bis auf den kurzen Schlitz 15 in der Umfangswand 12' vollständig fertiggestellt. In diesem Zustand wird der Gassack einen Metallaufspürgerät zugeführt, welches ein Alarmsignal abgibt, wenn sich in oder an dem Gassack 12 noch irgendwelche Metallteile befinden. Hierbei kann es sich z.B. um teilweise oder ganz abgebrochene Nadeln der die Nähte 20 herstellenden Nähmaschine handeln.

Wird in dem Gassack 12 ein Metallteil festgestellt, wird dieser ausgesondert. Nach Auffinden und Entfernung des Metallstückes kann der Gassack 12 dann eventuell erneut auf das Vorhandensein von Metallteilen überprüft werden.

Sobald bei einem bis auf den kurzen Schlitz 15 fertiggestellten Gassack 12 festgestellt worden ist, daß an oder in ihm keine Metallteile vorhanden sind, wird erfindungsgemäß der Generatorträger 11 durch den kurzen Schlitz 15 hindurch in das Innere des Gassackes 12 eingeführt, wobei die Haltelaschen 18 durch die Schlitze 19 in der Flachseite 12''' hindurchgeführt werden, worauf der Generatorträger 11 die aus Figur 1 ersichtliche Position einnimmt.

Anschließend wird durch die Öffnung 13 hindurch das eine Form entsprechend dem Generator 14 aufweisende Tragteil 17 eingebracht, worauf gemäß Figur 1 von der Stirnfläche 12'' des Gassackes 12 die Haltestange 26 mit dem Haltegriff 27 koaxial zum Generatorträger 11 vorsteht. Durch die paßgenaue Anordnung des Tragteils 17 im Generatorträger 11 kann dann mittels der Haltestange 26 und des Haltegriffes 27 der Generatorträger 11 einschließlich des daran befindlichen Gassackes 12 sowohl maschinell als auch von Hand einwandfrei gehalten und gehandhabt werden.

Mittels der Halterung 16 wird der Gassack 12 dann einer Nähmaschine zugeführt, die den kurzen Schlitz 15 zunäht. Dies erfolgt unter einer Videoüberwachung der Nähnadel bzw. Nähnadeln, damit auch in diesem Stadium der Herstellung gewährleistet werden kann, daß keine Metallteile im oder am Gassack abgelagert werden.

Nachdem der Schlitz 15 zugenäht worden ist und keine Nadelbeschädigung oder kein Nadelbruch festgestellt wurde, wird das Tragteil 17 mit der Halterung 16 aus dem Generatorträger 11 bzw. der damit ausgerichteten Öffnung 13 entfernt und der Generator 14 durch die Öffnung 13 in das Innere des Generatorträgers 11 eingebracht und dort befestigt. Dabei stehen die Laschen 18 gemäß Figur 1 durch die Schlitze 29 hindurch senkrecht von der Flachseite 12''' des Gassackes 12 vor.

Vor dem Zusammenbau mit dem Gassack 12 kann auf die Laschen des Generatorträgers 11 noch ein in Figur 2 dargestelltes Zwischenstück 22 mit zu den Laschen 18 komplementären Schlitzen 19' aufgebracht werden, welches zur besseren Halterung des Generators 14 und auch des Tragteils 17 dient.

Die Kombination Generatorträger 11 - Generator 14 - Gassack 12 ist damit fertiggestellt. Die Anordnung aus Generatorträger 11, Gassack 12, Generator 14 und gegebenenfalls Zwischenstück 22 wird dann in ein in Figur 2 dargestelltes Gehäuse 21 eingebracht, welches aus zwei über ein Gelenk 23 gelenkig miteinander verbundenen Gehäusehälften besteht, an deren Verschlußseiten Bügel 24 bzw. Federzungen 25 angeordnet sind, mittels denen die beiden Gehäusehälften durch Verschwenkung um das Gelenk 23 zusammengeklipst werden können.

Im Bereich des Gelenkes 23 weist das Gehäuse 21 zwei in Fig. 2 nicht erkennbare Schlitze auf, durch welche die Laschen 18 hindurchgesteckt werden können, um von der Rückseite des Gehäuses zu Befestigungszwecken beispielsweise in der Rückenlehne eines Fahrzeugsitzes zur Verfügung zu stehen. Beim Zusammenbau der Kombination Generatorträger 11 - Generator 14 - Gassack 12 wird der Gassack 12 in geeigneter Weise so zusammengefaltet, daß er innerhalb des geschlossenen Gehäuses 21 untergebracht werden kann.

Die Funktion der beschriebenen Airbag-Anordnung ist wie folgt:

Bei einem Unfall zündet der Generator 14 und bläht dadurch den den Generatorträger 11 umgebenden Gassack 12 auf, wodurch die beiden Hälften des Gehäuses 21 auseinandergedrückt werden. Durch geeignete Ausbildung der Bügel 24 und der Federzungen 25 kann dabei eine Lösung des Verschlusses zwischen den beiden Gehäusehälften erfolgen, worauf sich das Gehäuse in die aus Figur 2 ersichtliche Position oder noch weiter öffnet und den Gassack 12 für ein Aufblähen in die in Figur 1 wiedergegebene Position freigibt.

Die anhand von Figur 1 beschriebene Airbaganordnung eignet sich besonders zur Anordnung an einem Fahrzeugsitz zwecks Schaffung einer Seitenabstützung des Fahrzeuginsassen bei einem Unfall.

## Patentansprüche

1. Verfahren zum Zusammenbau eines Airbag-Generatorträgers (11) mit einem zugehörigen Gassack (12), welcher eine Öffnung (13) zum Einbringen des Generators (14) in den Generatorträger (11) aufweist,
dadurch gekennzeichnet,
daß
- der Gassack (12) bis auf einen kurzen Schlitz (15) zum Einbringen des Generatorträgers (11) vollständig zusammengenäht wird,
- der Gassack (12) in diesem Zustand einem Metallaufspürgerät ausgesetzt wird,
- für den Fall, daß kein Metall am oder im Gassack (12) festgestellt wird, der Generatorträger (11) durch den schmalen Schlitz (15) in den Gassack (12) eingeführt und innerhalb des Gassackes (12) an seinen Bestimmungsort gebracht wird, und daß
- anschließend der Schlitz (15) unter Überwachung auf Nadelbeschädigung und/oder Nadelbruch zugenäht wird.

2. Verfahren nach Anspruch 1,
dadurch gekennzeichnet,
daß der Generator (14) nach dem Zunähen des Gassackes (12) von außen durch die Öffnungen (13) in den Generatorträger (11) eingebracht wird.

3. Verfahren nach Anspruch 1 oder 2,
dadurch gekennzeichnet,
daß nach dem Einbringen des Generatorträgers (11) in den Gassack (12) in seine Sollposition statt des Generators (14) zunächst ein formmäßig dem Generator (14) entsprechendes, mit einer Halterung (16) verbundenes Tragteil (17) in dem Generatorträger (11) eingebracht wird, daß
- der Gassack (12) mittels der Halterung (16) zum Zunähen des Schlitzes (15) an eine Nähmaschine herangeführt wird und daß
- nach dem Zunähen das Tragteil (17) aus dem Generatorträger (11) entfernt und durch den Generator (14) ersetzt wird.

4. Verfahren nach einem der vorhergehenden Ansprüche,
dadurch gekennzeichnet,
daß die Überwachung auf Nadelbeschädigung bzw. -bruch während des Zunähens durch eine Videokamera erfolgt.

5. Verfahren nach einem der vorhergehenden Ansprüche zum Zusammenbau eines Haltelaschen (18) aufweisenden zylindrischen Generatorträger (11) mit einem zylinder- und taschenartigen Gassack (12), der eine zylinderartig gebogene Umfangsfläche (12') und zwei annähernd ebene, vorzugsweise längliche Stirnseiten (12'') aufweist, wobei an der von der gebogenen Umfangsfläche (12') abgewandten Flachseite (12''') Durchstecköffnungen (19) für die Halterlaschen (18) und in einer Stirnseite (12'') die Öffnung (13) für den Generator (14) vorgesehen ist, wobei der Schlitz (15) in der gebogenen Umfangswand (12') nahe der Flachseite (12''') vorzugsweise parallel zu dieser angeordnet ist.

6. Verfahren nach einem der vorhergehenden Ansprüche,
dadurch gekennzeichnet,
daß der mit dem Gassack (12) und dem Generator (14) zusammengebaute Generatorträger (11) in einem aus mehreren zusammenklipsbaren Gehäuseteilen bestehenden Gehäuse (21) angeordnet wird, wobei die zusammengeklipsten Gehäuseteile bei Zündung des Generatorträgers (14) zwecks Freigabe des sich aufblähenden Gassackes (12) trennbar sind.

7. Halterung für einen mit einem Gassack (12) zusammengebauten Generatorträger (11), in den von außen durch den Gassack (12) hindurch ein Generator (14) einführbar ist, zur Ausführung des Verfahrens nach Anspruch 3,
dadurch gekennzeichnet,
daß sie ein Tragteil (17) aufweist, dessen Form und Abmessungen denen des Generators (14) entspricht, und daß an dem Tragteil (17) eine Handhabungsvorrichtung (26, 27) derart befestigt ist, daß sie nach Einführung des Tragteils (17) in den Generatorträger (11) zur Handhabung des mit dem Gassack (12) zusammengebauten Generatorträgers (11) verwendet werden kann.

## Claims

1. Method for the assembly of an airbag generator carrier (11) with an associated gas sack (12) which has an opening (13) for the introduction of the generator (14) into the generator carrier (11),
characterized in that
- the gas sack (12) is completely sewn together apart from a short slit (15) for the introduction of the generator carrier (11),
- the gas sack (12) is exposed in this state to a metal seeking apparatus,
- in the case that no metal is found at the or in the gas sack (12), the generator carrier (11) is introduced through the narrow slit (15) into the gas sack (12) and is brought to its intended location within the gas sack (12); and in that
- the slit (15) is subsequently sewn together while monitoring for damage to the needle and/or needle breakage.

2. Method in accordance with claim 1,
characterized in that
the generator (14) is introduced from the outside through the openings (13) into the generator carrier (11) after the sewing up of the gas sack (12).

3. Method in accordance with claim 1 or claim 2,
characterized in that
after the introduction of the generator carrier (11) into the gas sack (12) into its desired position, a carrier part connected to a holder (16) and corresponding in shape to the generator (14) is introduced into the generator carrier (11); in that
- the gas sack (12) is moved up to a sewing machine by means of the holder (16) for the sewing up of the slit (15); and in that
- after the sewing up operation, the carrier part (17) is removed from the generator carrier (11) and replaced by the generator (14).

4. Method in accordance with one of the preceding claims,
characterized in that
the monitoring for damage to the needle or needle breakage during the sewing up takes place by a video camera.

5. Method in accordance with one of the preceding claims, for the assembly of a cylindrical generator carrier (11) having holding lugs (18) with a cylindrical and pocket-like gas sack (12) having a cylinder-like curved peripheral surface (12') and two approximately planar, preferably elongate end faces (12''), wherein openings (19) for the passage of the holding lugs (18) are provided at the flat side (12''') remote from the arched peripheral surface (12') and wherein the opening (13) for the generator (14) is provided at one end face (12''), with the slit (15) being arranged in the arched peripheral wall (12') close to the flat side (12''') and preferably parallel to the latter.

6. Method in accordance with one of the preceding claims,
characterized in that
the generator carrier (11) assembled together with the gas sack (12) and the generator (14) is arranged in a housing (21) consisting of a plurality of housing parts which can be clipped together, with the clipped together housing parts being separable on ignition of the generator carrier (14) for the purpose of release of the inflating gas sack (12).

7. Holder for a generator carrier (11) assembled together with a gas sack (12), with a generator (14) being insertable into the generator carrier from the outside through the gas sack (12)for carrying out the method of claim 3,
characterized in that
it has a carrier part (17), the shape and dimensions of which correspond to those of the generator (14), and in that a handling device (26, 27) is secured to the carrier part (17) in such a way that it can be used after the introduction of the carrier part (17) into the generator carrier (11) for the handling of the generator carrier (11) assembled together with the gas sack (12).

## Revendications

1. Procédé d'assemblage d'un support de générateur de gaz pour coussin d'air (11) avec le sac à gaz associé (12), lequel comporte une ouverture (13) pour l'introduction du générateur (14) dans le support de générateur (11),
caractérisé en ce que
- le sac à gaz (12) est complètement cousu, à l'exception d'une courte fente (15) pour l'introduction du support de générateur (11),
- le sac à gaz (12) est exposé dans cet état à un appareil de détection de métal,
- dans le cas où l'on ne détecte aucun métal sur ou dans le sac à gaz (12), le support de générateur (11) est introduit dans le sac à gaz (12) à travers la fente étroite (15), et il est amené à l'intérieur du sac à gaz (12) à son emplacement de destination, et
- on ferme ensuite la fente (15) par couture en surveillant les endommagements et/ou les ruptures d'aiguilles.

2. Procédé selon la revendication 1, caractérisé en ce que le générateur (14) est introduit depuis l'extérieur dans le support de générateur (11) à travers l'ouverture (13), après fermeture du sac à gaz (12) par couture.

3. Procédé selon l'une ou l'autre des revendications 1 et 2, caractérisé en ce que, après introduction du support de générateur (11) dans le sac à gaz (12) dans sa position de consigne, on introduit dans le support de générateur (11) au lieu du générateur (14) tout d'abord une pièce porteuse (17) correspondant quant à sa forme au générateur (14) et reliée à une monture (16), en ce que le sac à gaz (12) est amené à une machine de couture au moyen de la monture (16) pour la fermeture de la fente (15), et en ce que, après fermeture de la fente, la pièce porteuse (17) est enlevée hors du support de générateur (11) et remplacée par le générateur (14).

4. Procédé selon l'une quelconque des revendications précédentes, caractérisé en ce que la surveillance des endommagements ou des ruptures d'aiguilles pendant la couture a lieu à l'aide d'une caméra vidéo.

5. Procédé selon l'une des revendications précédentes pour l'assemblage d'un support de générateur cylindrique (11), comportant des pattes de maintien (18), avec un sac à gaz (12) cylindrique et analogue à une poche, qui comporte une surface périphérique (12') cintrée et sous forme cylindrique, et deux faces frontales (12'') approximativement planes et de préférence allongées, dans lequel on prévoit sur la face plane (12''') détournée de la surface périphérique cintrée (12') des ouvertures de passage (19) pour les pattes de maintien (18), et dans une face frontale (12'') l'ouverture (13) pour le générateur (14), et la fente (15) étant agencée dans la paroi périphérique cintrée (12') à proximité de la face plane (12''') de préférence parallèlement à celle-ci.

6. Procédé selon l'une des revendications précédentes, caractérisé en ce que le support de générateur (11) assemblé avec le sac à gaz (12) et le générateur (14) est agencé dans un boîtier (21) constitué de plusieurs parties de boîtier susceptibles d'être assemblées par encliquetage, dans lequel les parties de boîtier assemblées par encliquetage sont séparables lors de l'allumage du support de générateur (14), dans le but de libérer le sac à gaz (12) qui se gonfle.

7. Monture pour un support de générateur (11) assemblé avec un sac à gaz (12), dans lequel on peut introduire un générateur (14) depuis l'extérieur et en traversant le sac à gaz (12), pour la mise en oeuvre du procédé selon la revendication 3, caractérisée en ce qu'elle comprend une partie porteuse (17) dont la forme et les dimensions correspondent à celles du générateur (14), et en ce que sur la pièce porteuse (17) est fixé un dispositif de manipulation (26, 27) de telle façon qu'après introduction de la pièce porteuse (17) dans le support de générateur (11), ce dispositif de manipulation peut être utilisé pour la manipulation du support de générateur (11) assemblé avec le sac à gaz (12).
